# EUROPEAN PATENT SPECIFICATION

(11) **EP 0 712 681 B1**
(45) Date of publication and mention of the grant of the patent: **02.02.2000**
(21) Application number: 95117803.7
(22) Date of filing: 10.11.1995
(51) Int. Cl.: B23K 35/28, B23K 1/00, B21B 1/38, F28F 21/08, C22C 21/00

(54) **Aluminum alloy brazing sheet, method of producing said brazing sheet, heat-exchanger using said brazing sheet and method of producing said heat-exchanger**
Hartlotfolie aus einer Aluminiumlegierung, Verfahren zur Herstellung dieser Hartlotfolie, Wärmetauscher mit dieser Hartlotfolie und Verfahren zur Herstellung dieses Wärmetauschers
Feuille de brasage en alliage d'aluminium, procédé de fabrication de ladite feuille de brasage, échangeur de chaleur avec ladite feuille de brasage et procédé de fabrication dudit échangeur de chaleur

(30) Priority: 11.11.1994 JP 27770694
(43) Date of publication of application: 22.05.1996
(73) Proprietor: THE FURUKAWA ELECTRIC CO., LTD., Tokyo 100 (JP)
(72) Inventor: Doko, Takeyoshi, Utsunomiya-shi, Tochigi-ken (JP); Takeuchi, Hiroaki, Nikko-shi, Tochigi-ken (JP)
(74) Representative: TER MEER STEINMEISTER & PARTNER GbR

(56) References cited:
- EP-A- 0 514 946
- EP-A- 0 556 798
- EP-A- 0 637 481
- US-A- 4 560 625
- PATENT ABSTRACTS OF JAPAN vol. 017, no. 385 (M-1448), 20 July 1993 & JP-A-05 069184 (NIPPON LIGHT METAL CO LTD;OTHERS: 01), 23 March 1993,
- PATENT ABSTRACTS OF JAPAN vol. 016, no. 212 (M-1250), 19 May 1992 & JP-A-04 036600 (SUMITOMO LIGHT METAL IND LTD;OTHERS: 01), 6 February 1992,
- DATABASE WPI Section Ch, Week 9426 Derwent Publications Ltd., London, GB; Class J08, AN 94-211184 XP002017757 & JP-A-06 145 859 (MITSUBISHI ALUMINIUM CO LTD) , 27 May 1994

## Description

### BACKGROUND OF THE INVENTION

The present invention relates to an aluminum alloy brazing sheet, which is used as a tube material of heat-exchanger for motorcars etc., which enables to lighten the heat-exchanger and which has high strength after brazing and excellent corrosion resistance, a method of producing the same, a heat-exchanger using said brazing sheet and a method of producing said heat-exchanger.

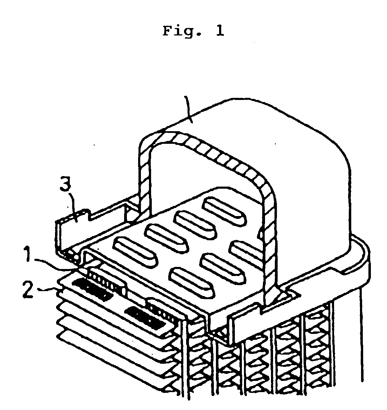

The heat-exchanger including radiator etc. has a structure as shown, for example, in Fig. 1, wherein corrugated thin-wall fins 2 are formed unitedly between a plurality of flat tubes 1, both ends of flat tubes 1 are allowed to open respectively in spaces constituted with header 3 and tank 4, a high-temperature refrigerant is fed from the space on one tank side to the space on other tank 4 side via flat tubes 1, thus cooling by heat-exchanging at areas of flat tubes 1 and fins 2, and the refrigerant after cooling is circulated again.

For the tube material of such heat-exchanger, a brazing sheet with three-layer structure, wherein, for example, one side of core material made of JIS-3003 alloy is cladded with JIS-7072 alloy as a sacrificial material and the other side is cladded with JIS-4045 alloy as a brazing material, is used after seam-welding tubularly so as the sacrificial material to locate on easy-corrosive inside. This tube material is assembled unitedly together with other components such as fin provided with corrugating processing by heating at a temperature near 600 °C by brazing technique. As the brazing technique, flux brazing method, Nocolock brazing method using noncorrosive flux, or the like is applied.

In recent years, however, the heat-exchangers are in the direction of light weight and downsize, and, for this reason, thinning of materials has been desired. For thinning the tube material, it is required first to increase the strength for decreased wall thickness of material and to secure the corrosion resistance.

To realize this, a method of improving the strength by allowing the sacrificial material to contain Mg is regarded as the most influential. For example, Japanese Unexamined Patent Publication Nos. Hei 6-23535 (EP-A-514946) and Hei 6-145859 are proposed recently.

With these alloys, however, the strength is insufficient for applying to a tube material with plate thickness of 0.25 mm or less and more improvement in the strength is desired.

In other aspect, a method of strengthening the core material is conceivable. However, this method is also not easy practically. For example, if increasing the strength of core material by increasing the addition level of Cu, a problem will arise in the corrosion resistance. Namely, as described "however, if the addition level of Cu exceeds 0.6 wt. %, the improvement effect on strength will be achieved, but, because of significant decrease in corrosion resistance, reinforcing the sacrificial anode effect of skin material (sacrificial material) may not result in sufficient corrosion resistance" in Japanese Unexamined Patent Publication No. Hei 6-23535, the corrosion resistance decreases significantly. This is seen to be a very difficult problem for solution also from the fact that the piercing pit corrosion is generating from the side of skin material (sacrificial material) in Test No. 12 (using an alloy with 0.7 wt. % of Cu added to the core material) of Example 1 in Japanese Unexamined Patent Publication No. Hei 6-23535. Japanese Unexamined Patent Publication No. Hei 6-145859 also describes the same reason.

EP-A-0 637 481 comprised in the state of the art in the sense of Article 54 (3) EPC discloses a brazing sheet for heat-exchanger satisfying the compositional requirements of the brazing sheets claimed herein but not the particular thickness range for the sacrificial material.

The purpose of the invention is to provide an aluminum alloy brazing sheet, which is used as a tube material of heat-exchanger for motorcars etc., which enables to lighten the heat-exchanger and which has high strength after brazing and excellent corrosion resistance, a method of producing the same, a heat-exchanger using said brazing sheet and a method of producing said heat-exchanger.

### SUMMARY OF THE INVENTION

The invention of Claim 1 provides a brazing sheet for heat-exchanger tube with three-layer structure in a thickness of not more than 0.25 mm, using an aluminum alloy comprising over 0.2wt. % and not more than 2.5 wt. % of Si, over 0.05 wt. % and not more than 2.0 wt. % of Fe, over 0.7 wt. % and not more than 2.5 wt. % of Cu, over 0.05 wt. % and not more than 2.0 wt. % of Mn and the balance of aluminum and inevitable impurities as a core material, cladded one side thereof with an aluminum alloy comprising over 3.0 wt. % and not more than 6.0 wt. % of Zn, over 0.05 wt. % and not more than 2.5 wt. % of Mg and the balance of aluminum and inevitable impurities in a thickness of over 46 µm and not more than 70 µm as a sacrificial material, and cladded other side thereof with a brazing material comprising an aluminum alloy comprising over 0.3 wt.% and not more than 8.0 wt.% of Cu.

The invention of Claim 2 provides a brazing sheet for heat-exchanger tube with three-layer structure in a thickness of not more than 0.25 mm, using an aluminum alloy comprising over 0.2 wt. % and not more than 2.5 wt. % of Si, over 0.05 wt. % and not more than 2.0 wt. % of Fe, over 0.7 wt. % and not more than 2.5 wt. % of Cu, over 0.05 wt. % and not more than 2.0 wt. % of Mn, one or not less than two kinds selected from a group consisting of not more than 0.5 wt. % of Mg, not more than 0.3 wt. % of Cr, not more than 0.3 wt. % of Zr and not more than 0.3 wt. % of Ti, and the balance of aluminum and inevitable impurities as a core material, cladded one side thereof with an aluminum alloy comprising over 3.0 wt. % and not more than 6.0 wt. % of Zn, over 0.05 wt. % and not more than 2.5 wt. % o Mg and the balance of aluminum and inevitable impurities in a thickness of over 46 µm and not more than 70 µm as a sacrificial material, and cladded other side thereof with a brazing material comprising an aluminum alloy comprising over 0.3 wt.% and not more than 8.0 wt.% of Cu.

The invention of Claim 3 provides a brazing sheet for heat-exchanger tube with three-layer structure in a thickness of not more than 0.25 mm, using an aluminum alloy comprising over 0.2 wt. % and not more than 2.5 wt. % of Si, over 0.05 wt. % and not more than 2.0 wt. % of Fe, over 0.7 wt. % and not more than 2.5 wt. % of Cu, over 0.05 wt. % and not more than 2.0 wt. % of Mn and the balance of aluminum and inevitable impurities as a core material, cladded one side thereof with an aluminum alloy comprising over 3.0 wt. % and not more than 6.0 wt. % of Zn, over 0.05 wt. % and not more than 2.5 wt. % of Mg, one or not less than two kinds selected from a group consisting of not more than 0.3 wt. % of In, not more than 0.3 wt. % of Sn and not more than 1.6 wt. % of Mn, and the balance of aluminum and inevitable impurities in a thickness of over 46 µm and not more than 70 µm as a sacrificial material, and cladded other side thereof with a brazing material comprising an aluminum alloy comprising over 0.3 wt.% and not more than 8.0 wt.% of Cu.

The invention of Claim 4 provides a brazing sheet for heat-exchanger tube with three-layer structure in a thickness of not more than 0.25 mm, using an aluminum alloy comprising over 0.2 wt. % and not more than 2.5 wt. % of Si, over 0.05 wt. % and not more than 2.0 wt. % of Fe, over 0.7 wt. % and not more than 2.5 wt. % of Cu, over 0.05 wt. % and not more than 2.0 wt. % of Mn, one or not less than two kinds selected from a group consisting of not more than 0.5 wt. % of Mg, not more than 0.3 wt. % of Cr, not more than 0.3 wt. % of Zr and not more than 0.3 wt. % of Ti, and the balance of aluminum and inevitable impurities as a core material, cladded one side thereof with an aluminum alloy comprising over 3.0 wt. % and not more than 6.0 wt. % of Zn, over 0.05 wt. % and not more than 2.5 wt. % of Mg, one or not less than two kinds selected from a group consisting of not more than 0.3 wt. % of In, not more than 0.3 wt. % of Sn and not more than 1.6 wt. % of Mn, and the balance of aluminum and inevitable impurities in a thickness of over 46 µm and not more than 70 µm as a sacrificial material, and cladded other side thereof with a brazing material comprising an aluminum alloy comprising over 0.3 wt.% and not more than 8.0 wt.% of Cu.

Besides, for the brazing material comprising aluminum alloy to be used in the invention of any of Claims 1 through 4 aforementioned, a brazing material with lower melting point than that of core material is used as a matter of course.

The invention of Claim 5 provides the aluminum alloy brazing sheet for heat-exchanger tube of any of Claims 1 through 4, characterized in that, for the brazing material, a brazing material comprising over 7.0 wt. % and not more than 12.0 wt. % of Si, over 0.3 wt. % and not more than 8.0 wt. % of Cu, one or not less than two kinds selected from a group consisting of over 0.5 wt. % and not more than 7.0 wt. % of Zn, over 0.001 wt. % and not more than 0.3 wt. % of In and over 0.001 wt. % and not more than 0.3 wt. % of Sn, and the balance of aluminum and inevitable impurities is used.

A method of producing the brazing sheet and an aluminum alloy heat exchanger are also claimed.

### BRIEF DESCRIPTION OF THE DRAWING

Fig. 1 is an oblique view of partial section showing a radiator.

Fig. 2 is a view of longitudinal section showing the structure of brazing sheet.

Fig. 3 is a view of transverse section of tube produced with brazing sheet.

### DETAILED DESCRIPTION OF THE INVENTION

The core material of brazing sheet in the invention of any of Claims 1 through 4 aforementioned is constituted with a high-strength alloy and has a feature of higher addition level of Cu. Namely, the core material is made of an aluminum alloy comprising over 0.2 wt. % and not more than 2.5 wt. % of Si, over 0.05 wt. % and not more than 2.0 wt. % of Fe, over 0.7 wt. % and not more than 2.5 wt. % of Cu, over 0.05 wt. % and not more than 2.0 wt. % of Mn and the balance of aluminum and inevitable impurities, or an aluminum alloy additionally added with one or not less than two kinds selected from a group consisting of not more than 0.5 wt. % of Mg, not more than 0.3 wt. % of Cr, not more than 0.3 wt. % of Zr and not more than 0.3 wt. % of Ti to said alloy.

In following, with respect to the core material, the role of addition elements and the reasons for restricting their addition levels will be explained.

Si contributes to the improvement in strength. When Si is not more than 0.2 wt. %, the improvement effect on strength is insufficient and, if over 2.5 wt. %, the melting point decreases, leading to melting on brazing, even if the brazing material in the invention of Claim 5 (the inventive brazing material) may be used. Thereamong, particularly, an alloy added with Si over 1.2 wt. % has not been used conventionally for brazing because of decreased melting point. Hence, Si was made to be over 0.2 wt. % and not more than 2.5 wt. %, but, taking the balance between strength, seam weldability, corrosion resistance and brazability into account, Si exhibits excellent characteristics at nearly 0.3 wt. % to 1.5 wt. %, in which it stabilizes specifically at 0.4 wt. % to 0.9 wt. %.

Fe has functions to distribute the coarse intermetallic compounds into alloy, to make the crystal grains fine and to prevent the cracking on seam welding. If the addition level is not more than 0.05 wt. %, then the effect cannot be achieved sufficiently and, if adding over 2.0 wt. %, the moldability decreases, leading to cracking of brazing sheet on seam welding.

Cu exists in alloy in the state of solid solution after brazing to improve the strength. Alloys with addition level of Cu being not more than 0.7 wt. % are proposed in Japanese Unexamined Patent Publication Nos. Hei 6-23535 and Hei 6-145859, but sufficient strength has not been obtained. The core material alloy of the invention has a feature in that it contains much amount of Cu exceeding 0.7 wt. %. In particular, the addition of Cu exceeding 1.2 wt. % creates a composition not used hitherto, because of decreased melting point, and an addition level characteristic of the invention. One of the reasons why the tube material used such alloy has not been developed conventionally is due to the problem of corrosion resistance. The means to solve the problem of decreased corrosion resistance when using an alloy with much amount of Cu added to the core material, according to the invention, will be described later. The reason why the addition level of Cu was restricted to be over 0.7 wt. % and not more than 2.5 wt. % in the invention is because of that, if the addition level of Cu is not more than 0.7 wt. %, then the sufficient improvement effect on strength cannot be achieved and, if the addition level of Cu is over 2.5 wt. %, then the melting point of core material decreases, leading to melting of core material on brazing. Hence, the addition level of Cu was made to be over 0.7 wt. % and not more than 2.5 wt. %, but good seam weldability and brazability are obtained specifically at 0.8 wt. % to 1.5 wt. %.

Mn is an essential element to distribute the fine intermetallic compounds into alloy and to improve the strength without decreasing the corrosion resistance. If the addition level is not more than 0.05 wt. %, then its effect cannot be achieved sufficiently and, if adding over 2.0 wt. %, the moldability decreases, leading to cracking of brazing sheet on seam welding.

Mg is an arbitrarily adding element that exists in the state of solid solution and as a finely precipitated phase of Mg₂Si in alloy to improve the strength, which may not be added. If Mg is added over 0.5 wt. %, then the flux and Mg react on brazing using noncorrosive flux, making the brazing impossible. Hence, when adding Mg, the maximum addition level is made to be 0.5 wt. %. From the point of brazing, it is desirable to be not more than 0.1 wt. %.

Cr, Zr and Ti are all arbitrarily adding elements having functions to form the fine intermetallic compounds to improve the strength and corrosion resistance, which may not be added. When adding each over 0.3 wt. %, the moldability decreases, leading to cracking on workings such as assembling.

The alloy composition of the inventive core material is as described above. Elements other than above such as B to be added for making the ingot texture fine and V to be added for the purpose of improved strength may be contained, if not more than 0.05 wt. %, respectively.

The features of the sacrificial material in the invention of any of Claims 1 through 4 lie in an aim of improving the strength through addition of Mg, which was proposed recently, and in higher addition level of Zn. Namely, the sacrificial material in the inventive brazing sheet is made of an aluminum alloy comprising over 3.0 wt. % and not more than 6.0 wt. % of Zn, over 0.05 wt. % and not more than 2.5 wt. % of Mg and the balance of aluminum and inevitable impurities, or an aluminum alloy additionally added with one or not less than two kinds selected from a group consisting of not more than 0.3 wt. % of In, not more than 0.3 wt. % of Sn and not more than 1.6 wt. % of Mn to said alloy.

In following, with respect to the sacrificial material, the role of addition elements and the reasons for restricting their addition levels will be explained.

Mg provides the sacrificial effect and strengthens the sacrificial material as well to increase the strength of overall material. If Mg is not more than 0.05 wt. %, then the effect is insufficient and, if over 2.5 wt. %, the processibility on hot rolling decreases and the rolling and pressure welding become difficult, making it impossible to produce the tube material as a three-layer structural material. Hence, Mg is made to be over 0.05 wt. % and not more than 2.5 wt. %. It exhibits stabilized characteristics specifically at 0.5 to 2.2 wt. %.

Zn improves the corrosion resistance of tube material and improves the strength of overall material as well. The strength improves by forming Al-Zn-Mg-Cu alloy, that is, supertransduralumin through the diffusion of Cu in core material into sacrificial material and the diffution of Zn and Mg from sacrificial material into core material. Namely, by combining said sacrificial material with the inventive core material containing increased amount of Cu, the improvement effect on strength is exerted. And, if Zn is not more than 3.0 wt. %, then the diffusion level of Zn into core material is deficient, resulting in insufficient such improvement effect on strength. If over 6.0 wt. %, the melting point decreases, leading to melting, even if the inventive brazing material may be used. Hence, Zn is made to be over 3.0 wt. % and not more than 6.0 wt. %. Specifically, Zn exhibits excellent corrosion resistance at 3.5 to 5.0 wt. %. This addition level of Zn to sacrificial material contributes significantly to the solution of the problem of decreased corrosion resistance when adding much amount of Cu to core material. The reason will be described later.

In, Sn and Mn are arbitarily adding elements, any one or more kinds of which are only necessary to be added. Thereamong, In and Sn promotes the sacrificial effect. If the amount is over 0.3 wt. %, then the rolling processibility of sacrificial material decreases, making unsuitable as a sacrificial material for brazing sheet. Mn strengthens the sacrificial material to increase the strength of overall brazing sheet (tube). If Mn is over 1.6 wt. %, the rolling processibility of alloy decreases, making unsuitable as a sacrificial material for brazing sheet.

As the inevitable impurities in the inventive sacrificial material, not more than 0.5 wt. % of Si and not more than 0.8 wt. % of Fe are allowable, but both are desirable to be not more than 0.1 wt. % from the point of corrosion resistance. Elements other than above such as Cr, Zr and Ti for improved strength may also be contained as impurity elements, if not more than 0.05 wt. %, respectively.

The inventive brazing material of Claim 5 exerts its effect particularly when using the inventive core material with composition on the side of higher concentration (core material containing not less than 1.2 wt. % of Si or not less than 1.2 wt. % of Cu) for the core material. The reason is because of that the problem of decreased external corrosion resistance and the problem of melting of core material on brazing due to low melting point of core material can be solved.

Namely, as a result of extensive investigations on the external corrosion resistance of heat-exchanger, the inventors have found that, when combining the brazing material used hitherto with the high-strength core material added with much amount of Cu as in the invention, Cu in core material diffuses into brazing material on brazing to create a low-Cu region in the vicinity of boundary between brazing material and core material and that place is corroded preferentially, thus causing intense corrosion accompanied with blisters. Whereas, in the invention, the diffusion of Cu from core material into brazing material was prevented by adding Cu to brazing material, thus not creating the low-Cu region in the vicinity of boundary between brazing material and core material for improved corrosion resistance. In addition, considering that, if making it possible to braze at a temperature of not higher than 585 °C in place of conventional brazing at a temperature near 600 °C, the melting of core material will be eliminated, a brazing material with lower brazing temperature than that of conventional brazing material has been used.

When the core material has the composition on the side of lower concentration containing under 1.2 wt. % of Si or under 1.2 wt. % of Cu, the inventive brazing material can be used, of course, but Al-Si type alloy brazing materials such as conventional JIS-4343 alloy and JIS-4045 alloy may also be used safely.

In following, the role of addition elements of the inventive brazing material and the reasons for restricting their addition levels will be explained.

Si lowers the melting point of brazing material. If the amount is either not more than 7.0 wt. % or over 12.0 wt. %, the melting point does not decrease sufficiently, leading to melting of core material on brazing.

Cu lowers the melting point of brazing material and increases the fluidity of brazing material. In addition, as described above, when using an alloy added with much amount of Cu for the refrigerant pathway-constituting component (core material), it works to suppress the occurrence of blisters due to external corrosion of heat-exchanger. If the addition level of Cu is not more than 0.3 wt. %, then the effect cannot be achieved sufficiently and, if over 8.0 wt. %, the electric potential of brazing material becomes too noble, resulting in preferential corrosion of core material. Moreover, the rolling processibility decreases, making it impossible to process the brazing sheet with three-layer structure. Hence, Cu in the brazing material is made to be over 0.3 wt. % and not more than 8.0 wt. %. It exhibits stabilized characteristics specifically at 1.0 to 3.0 wt. %.

When adding Cu to brazing material, the occurrence of blisters due to external corrosion can be suppressed, but a problem that the electric potential of brazing material becomes nobler than that of core material and the external corrosion progresses rapidly pit-like arises. Zn brings said electric potential of brazing material that was raised by the addition of Cu close to the electric potential of core material for improved corrosion resistance. Moreover, Zn lowers the melting point of brazing material.

If Zn is not more than 0.5 wt. %, then the effect cannot be achieved sufficiently and, if over 7.0 wt. %, not only the self-corrosion resistance decreases, but also the rolling processibility decreases, resulting in difficult processing of brazing sheet with three-layer structure.

In and Sn also makes the electric potential of brazing material baser and improves the corrosion resistance of refrigerant pathway-constituting component. If the addition level is not more than 0.002 wt. %, then the effect cannot be achieved sufficiently and, if over 0.3 wt. %, the rolling processibility of alloy decreases. From the point of sacrificial effect, any of Zn, In and Sn may be added, but Zn is beneficial since it lowers the melting point of brazing material as described above. It is more preferable characteristically to add Zn within a range from not less than 2.0 wt. % to under 6.0 wt. %.

The explanation on the alloy elements of the inventive brazing material is as above. An inevitable impurity Fe is allowable, if not more than 1.0 wt. %, Fe however forms the intermetallic compounds on the solidification of brazing material, making these as starting points of corrosion. Hence, Fe is desirable to be not more than 0.5 wt. % and further to be not more than 0.3 wt. %, if possible. Other inevitable impurity elements except Fe may also be safe, if not more than 0.05 wt. %, respectively.

The explanations on the alloy compositions and the inevitable impurity elements of core material, sacrificial material and brazing material constituting the inventive brazing sheet are as described above.

Next, explanations will be made about the structure and the dimensions of brazing sheet in the invention of any of Claims 1 through 5.

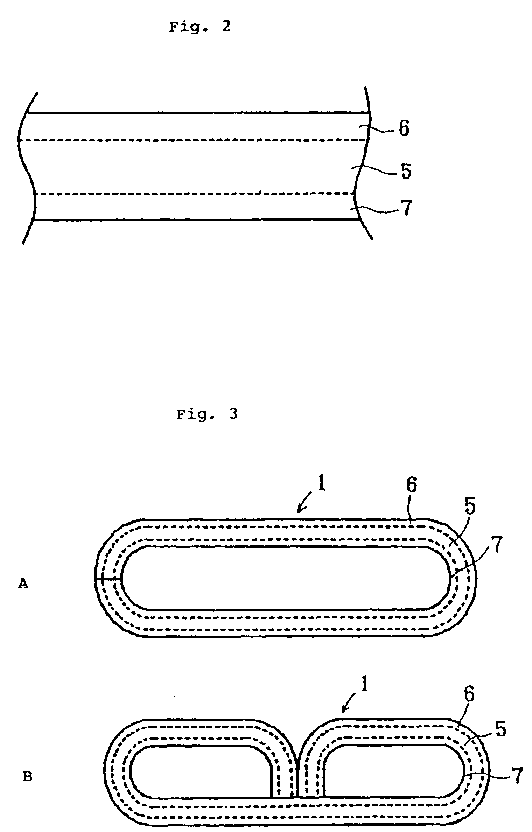

The brazing sheet of the invention has a three-layer structure as shown in Fig. 2. Namely, a high-strength aluminum alloy is used as a core material 5, and one side of this core material is cladded with brazing material 6, the other side with sacrificial material. This brazing sheet is made to be a flat tube 1, as shown in Fig. 3(a) or (b), respectively, by seam welding in tubular shape or by bending so that the brazing material 6 is on the outside and the sacrificial material 7 is on the side of refrigerant pathway.

The plate thickness of the inventive brazing sheet is not more than 0.25 mm. This is because of that the invention was developed for the purpose of lightening heat-exchanger and, with plate thickness over 0.25 mm, conventional materials are usable due to little problems in strength and corrosion resistance. If the plate thickness is too thin, then Mg in sacrificial material diffuses into brazing material resulting in difficult brazing. For such reason, the plate thickness is desirable to make not less than 0.18 mm.

The thickness of brazing material is usually over 10 µm and not more than 40 µm. This thickness is determined based on the brazability, which is within a range of the thickness of usual brazing material for conventional tube material.

The thickness of sacrificial material over 46 µm and not more than 70 µm is a feature of the invention. Namely, if not more than 46 µm, the corrosion resistance cannot be secured. This reason will be described later. When over 70 µm, the production of brazing sheet with three-layer structure by rolling and pressure welding process becomes difficult. Besides, there has been no example in the past for such one that, in the brazing sheet with sacrificial material of the inventive alloy composition, its thickness is as very thin as 0.25 mm or less and said thick sacrificial material is combined therewith. For example, in the case of a brazing sheet with total plate thickness of 0.22 mm, the sacrificial material of over 46 µm and not more than 70 µm accounts for about 21 to 32 % at clad rate. Typical examples for the brazing sheet with three-layer structure including the sacrificial material with the inventive alloy composition are shown in Japanese Unexamined Patent Publication Nos. Hei 6-23535 and Hei 6-145859, but, looking at the examples, the plate thickness of brazing sheet is 0.3 mm and the thickness of sacrificial material is 30 µm, that is, the clad rate is 10 %. Namely, despite thicker plate thickness than that in the invention, the sacrificial material is thinner.

The reason why there are no examples of brazing sheet cladded with the inventive sacrificial material in the inventive thickness in this way is due to the difficult production and the problem of corrosion resistance. As for the corrosion resistance, description will be made later. The brazing sheet with sacrificial material of the inventive alloy composition formed in a thickness of over 46 µm and not more than 70 µm could not be produced by usual production method of brazing sheet, that is, a method of layering the previously rolled sacrificial material and brazing material on the upper and lower sides of core material ingot, respectively, and of pressure welding this layered matter during hot rolling. For example, in the case of a material as thick as 1 mm like plate material, the sacrificial material with a thickness equivalent to the invention can be obtained, but such a brazing sheet that has the core material and sacrificial material with the inventive alloy compositions and that is the brazing sheet with the inventive thickness (0.25 mm or less) including thick sacrificial material (high clad rate) as in the invention could not be produced industrially. As described above, in Japanese Unexamined Patent Publication Nos. Hei 6-23535 and Hei 6-145859, despite thicker plate thickness than in the invention, the sacrificial material is thinner. Moreover, in Japanese Unexamined Patent Publication No. Hei 4-371368, despite less Zn in the sacrificial material than that in the invention, the clad rate is maximum at 15 %, which is shown in Test No. 26 (comparative example). Furthermore, in Japanese Unexamined Patent Publication No. Hei 5-69184, the clad rate is prescribed at 8 to 25 % in the invention of Claim 6, which affords an impression as if high clad rate might be possible. However, in the case of sacrificial material alloy of Japanese Unexamined Patent Publication No. Hei 5-69184, in addition to less amount of Zn (3.0 wt. % or less) than in the inventive sacrificial material, the residual amount of Zn in the sacrificial material after brazing is laid down at 1.5 wt. % or less. Since the thicker the sacrificial material, the more the residual amount of Zn, the amount of Zn as high as 2 wt. % becomes the maximum addition level to obtain the residual amount of Zn shown in Japanese Unexamined Patent Publication No. Hei 5-69184 with the thickness of the inventive sacrificial material. Namely, the sacrificial material in Japanese Unexamined Patent Publication No. Hei 5-69184 can be produced, because of an alloy with far less amount of Zn compared with the sacrificial material to be used in the invention.

Here, the usual production method of brazing sheet will be explained.

The sacrificial material alloy and brazing material alloy with given compositions are cast and the ingots obtained are subject to homogenizing treatment followed by planing, which are hot rolled to process to plates with given thicknesses. Similarly, core material alloy with given composition is cast and the ingot obtained is subject to homogenizing treatment followed by planing. On the upper and lower sides of this core material alloy, the sacrificial material and brazing material are layered and then this layered matter is heated to a given temperature and hot rolled for pressure welding three materials.

The inventors investigated on the reason why the brazing sheet with the inventive constitution could not be produced by such pressure welding according to conventional hot rolling and have known followings. After a series of investigations were made further, they reached the completion of the invention.

When pressure welding the aluminum alloy material by hot rolling, it is required to destroy the oxidized film produced on the surface to be pressure welded. For the alloy to be pressure welded, therefore, an alloy producing the oxidized film as difficulty as possible is desirable. Whereas, since the sacrificial material to be used in the invention contains Mg and yet Zn over 3 wt. %, it produces thick oxidized film on the surface on heating for ply rolling. This has been considered to be a cause of difficult pressure welding.

From the fact however that, even with the inventive sacrificial material alloy, the production became possible in a sort of way, if the clad rate was 10 % or so, the inventors considered there would be any more factor, leading to further investigations. As a result, while it is required to perform the ply rolling so that a shear force is created on the surface to be pressure welded to destroy the oxidized film for pressure welding, it has become clear that the shear force on hot rolling is high in the vicinity of 7 % from ends in the direction of thickness, that the conventional clad rate of 3 to 15 % meets with this, and that, on the contrary, no sufficient shear force acts in the invention, because of the clad rate over 15 %. After more detailed examinations, it has also become clear that, in the usual ply rolling, the shear force acts through high stretch of sacrificial material relative to core material, but the inventive sacrificial material alloy has high deformation resistance in the hot state and shows low stretch of sacrificial material relative to core material, making the shear force difficult to act.

Based on these, upon producing the brazing sheet difficult to produce in the past through ply rolling process, the problem has been solved by restricting the conditions of hot rolling for pressure welding in the invention.

The invention of Claim 6 provides a method of producing the brazing sheet of any of Claims 1 through 5, characterized in that, in the method of producing the brazing sheet by rolling and pressure welding the three-layer structural material with brazing material, core material and sacrificial material layered in order, the rolling-starting temperature is made to be not lower than 450 °C and the rolling temperature at a thickness of three-layer structural material of not less than 100 mm during said rolling is made to be not lower than 400 °C.

In following, explanation will be made about this substance of the invention.

Conventionally, the ply rolling is performed after planing the core material and simply washing the sacrificial material etc, following the homogenizing treatment. It has been considered that the lower the temperature for ply rolling, the less the growth of oxidized film, thus the easier the pressure welding. Hence, the rolling-starting temperature has been 400 °C or so. The rolling-starting temperature in the invention is 450 °C or higher and the reason for such high temperature is because of that the pressure welding was considered to be possible by acting the shear force enough to destroy the oxidized film, even if it might grow. As the rolling temperature increases, the deformation resistances of core material and sacrificial material decrease, respectively, but the decreasing rate is higher for sacrificial material, thereby decreasing the difference between the deformation resistance of core material and that of sacrificial material. Hence, even when thickly cladding the inventive sacrificial material alloy, the shear force acts effectively, making the pressure welding possible. Further, if the reduction level is not more than 20 mm per pass from start of rolling to fifth pass, then the pressure welding results more surely. This is because of that the shear force becomes to reach deeper layer.

In addition, the reason why the rolling temperature at a plate thickness of not less than 100 mm was made to be not lower than 400 °C is because of that, if the rolling temperature decreases under 400 °C, the sacrificial material does not deform, but only the core material deforms, leading to peeling-off of interface between core material and sacrificial material pressure welded at great pains. Such peeling-off is difficult to occur at a plate thickness under 100 mm, hence the rolling temperature down to 100 mm was prescribed. When rolling at low reduction level of not more than 20 mm per pass as described above, decrease in the temperature is significant and the temperature very often decreases to under 400 °C at a plate thickness of not less than 100 mm. When the temperature decreased to under 400 °C, the rolling is discontinued and, after reheating to a temperature of not less than 400 °C, the rolling may be started.

The final temperature and the final plate thickness on hot rolling are not particularly prescribed and determined according to usual method. After hot rolling, the cold rolling and annealing are performed as usual to make a given refined bar material determined from the reasons such as moldability and restraint of diffusion of brazing material on brazing.

The alloy compositions, structure and dimensions of the inventive brazing sheet have been explained as above. The features are in following points: ① Cu is added to the core material in much amount over 0.7 wt. %, ② Mg is added to the sacrificial material, ③ Zn in the sacrificial material is over 3.0 wt. %, ④ the thickness of brazing sheet is not more than 0.25 mm, and ⑤ the thickness of sacrificial material is over 46 µm. And, by satisfying all of these five points, the inventive tube material with high strength and excellent corrosion resistance after brazing can be obtained.

The reason why the inventive tube material has high strength is, as described above, because of that Cu over 0.7 wt. % is added to the core material, Mg and Zn over 3.0 wt. % are added to the sacrificial material, the these addition elements diffuse by heating on brazing to form an alloy equivalent to supertransduralumin and to increase the strength of core material and sacrificial material, thus making it possible to thicken the sacrificial material and to improve the corrosion resistance.

The inventive brazing sheet is aiming at preventing decrease in the corrosion resistance causing by the addition of Cu over 0.7 wt. % to the core material and thinning the wall. The prevention of decrease in corrosion resistance was performed concretely by adding Zn to the sacrificial material in much amount over 3.0 wt. % and by increasing the thickness of sacrificial material over 46 µm. By means of these, the inventive brazing sheet has accomplished high strength and high corrosion resistance.

The invention of claim 7 provides an aluminum alloy heat-exchanger assembled by brazing method, using brazing sheet aforementioned.

Namely, this is an aluminum alloy heat-exchanger produced by brazing technique, characterized in that an aluminum alloy tube material with a thickness of not more than 0.25 mm is used, the thickness of sacrificial material of that tube material is over 46 µm and not more than 70 µm, the Cu concentration at the central portion of the core material of tube material is over 0.40 wt. % and not more than 2.0 wt. %, and the Zn concentration on the surface of sacrificial material is over 1.6 wt. % and not more than 4.0 wt. %.

The reason why the thickness of tube material was restricted to not more than 0.25 mm and why the lower limit of that thickness is desirable to be 0.18 mm are as described earlier.

The thickness of sacrificial material is made to be over 46 µm and not more than 70 µm. Although there is an example wherein the clad material with such thick layer of sacrificial material was manufactured by way of trial in the laboratory by welding the rolling tip portions of core material and sacrificial material followed by rolling and pressure welding (Japanese Unexamined Patent Publication No. Hei 5-339666), the invention is the first that allowed to produce on the industrial scale. The reason why the upper limit of the thickness of sacrificial material was made to be 70 µm is also as described earlier. If the thickness of sacrificial material is not more than 46 µm, then Cu added to the core material diffuses into the sacrificial material in much amount on brazing to decrease the corrosion resistance of tube material. In addition, also for making the amount of Zn on the surface of sacrificial material to become over 1.6 wt. %, the thickness of sacrificial material over 46 µm is required.

The central portion of the core material of tube material refers to the neighborhood of center in the direction of thickness and, by polishing the cross section and analyzing with EPMA, the amounts of various elements can be determined. When the Cu concentration at the central portion of core material aforementioned is not more than 0.40 wt. %, the strength is deficient. If the Cu concentration exceeds 2.0 wt. %, then the piercing pits are caused in a short period through the crystal boundary corrosion.

The Zn concentration on the surface of sacrificial material refers to the concentration of Zn within a depth of 10 µm or so from the surface of sacrificial material with oxides on the surface eliminated, which corresponds to the maximum Zn concentration shown in Japanese Unexamined Patent Publication Nos. Hei 4-371368 and Hei 5-69184. If the Zn concentration is under 1.6 wt. %, then the corrosion resistance cannot be secured in the case of Cu concentration at the central portion of core material exceeding 0.40 wt. %. Namely, as a result of examination on the cause of decrease in the corrosion resistance of tube material with Cu added to the core material, it has become clear ① that, because of the diffusion of Cu in core material into sacrificial material, the progress of corrosion in the sacrificial material changes from plane-like to pit-like, thereby making the time for corrosion reaching the core material very short, and ② that, because of the core material added with Cu being liable to cause the crystal boundary corrosion, when the corrosion reaches the surface of core material even in a little amount, the crystal boundary corrosion progresses in the core material, leaving the sacrificial material behind, leading to the completion of the invention based on this examination results.

If the Zn concentration on the surface of sacrificial material is kept to be not less than 1.6 wt. %, then the corrosion progresses plane-like, even if Cu in the core material may diffuse into the sacrificial material. Moreover, in the invention, the time for corrosion reaching the core material is also long because of thick sacrificial material. Furthermore, if the Zn concentration on the surface of sacrificial material is not less than 1.6 wt. % after the corrosion reached the core material, then the crystal boundary corrosion is not caused in the core material, but the sacrificial material corrodes. This is because of that the sacrificial material has far larger electric potential difference than that in the vicinity of crystal boundary that becomes a cause of crystal boundary corrosion, and that the corrosion in the sacrificial material is liable to progress plane-like. Besides, if Zn is added so as the Zn concentration on the surface of sacrificial material to exceed 4.0 wt. % after brazing, then the sacrificial material ends up to melt by the brazing technique prescribed in the invention, making it impossible to produce the heat-exchanger.

Now, for the range of Zn possible to add to the sacrificial material, a wide range has been made to be possible from old days as shown to be 0.3 to 5 wt. %, for example, in Japanese Unexamined Patent Publication No. Sho 54-99022. However, as represented by the JIS-7072 alloy added with 1 wt. % of Zn, being a typical sacrificial material alloy, the addition level was usually not more than 3 wt. %. The reason therefor is because of that "for making the residual amount of Zn in the sacrificial material to be not more than 1.5 wt. %, taking the velocity consuming the sacrificial material into account, the amount of Zn contained in the sacrificial material is being made to be not more than 3.0 wt. %" as described in Japanese Unexamined Patent Publication Nos. Hei 4-371368 and Hei 5-69184, in addition to the problem on production as descried previously. Similar substance is also described in Japanese Patent Publication No. Hei 6-23535. Namely, it remarks in Claim 7 that the difference in the electric potential for pit corrosion between core material and sacrificial material is 30 to 130 mV, and describes that "if the difference in the electric potential for pit corrosion becomes 120 mV or higher, then the velocity consuming the skin material (sacrificial material) becomes high, making it impossible to maintain the sacrificial anode effect for a long period."

In the invention, however, Cu diffuses from the core material, hence the relationship between the velocity consuming the sacrificial material containing Cu and the amount of Zn was examined in detail. As a result, it has been made clear that the velocity increases rapidly to the residual amount of Zn of around 0.5 wt. %, increases gradually at 0.5 to 1.2 wt. %, and, when exceeding 1.2 wt. %, the velocity consuming the sacrificial material hardly vary, even if the addition level of Zn may be increased. Hence, even with the amount of Zn in the invention, the velocity consuming the sacrificial material poses no problem. Besides, in the invention, the Cu concentration at the central portion of the core material of tube material is over 0.40 wt. % and the difference in the electric potential for pit corrosion between core material and sacrificial material is being not lower than 150 mV, which are allowing a combination of core material with sacrificial material that cannot be conceived also from Japanese Unexamined Patent Publication No. Hei 6-23535.

With reference to the facts as above, the addition levels of Cu- in the core material and Zn in the sacrificial material were established. Except these, the tube material may contain the elements (Si, Fe, Cu, Mn, Mg, Cr, Zr, Ti, Zn, In, Sn, B, V, etc.) described in Claims 1 through 5 and in the explanation therefor in the invention. The maximum levels to be contained at that time are the amounts described in Claims 1 through 5 and in the explanation therefor.

In the invention, the heat-exchanger implies radiator, heater, evaporator, condenser, oil cooler, etc. used mainly for motorcars etc. Said heat-exchangers are produced by brazing technique. Here, the brazing technique is a technique employed conventionally such as vacuum brazing and flux brazing. Thereamong, the brazing method using noncorrosive flux is recommended. The fin material to be used for the inventive heat-exchanger may be one used usually such as Al-Mn type alloy or pure aluminum type alloy. Since the strength of tube material of the inventive heat-exchanger is high, it is more efficient to use one regarding the thermal conductance as more important than the strength for fin material.

The invention of Claim 8 provides a method of producing the aluminum alloy heat-exchanger, characterized in that the heat-exchanger is assembled by brazing using the brazing sheet of Claim 5 under the condition of reaching a temperature of 570 to 585 °C.

The reason why the reaching temperature by brazing method was prescribed to be over 570 °C and not higher than 585 °C in the invention of Claim 8 is because of that, if the brazing temperature is not higher than 570 °C, then there are some compositions that do not melt among the inventive brazing materials, making the brazing impossible. Also, if over 585 °C, there are some compositions that melt among the inventive core materials.

Since the inventive brazing material has low melting point, the brazing can be performed at lower temperature, thereby bringing effects to improve the buckling resistance at high temperature and the thermal conductance of fin. Moreover, there is also an effect of prolonged life of brazing furnace.

Besides, as a method of brazing at lower temperature than usual brazing temperature in this way, a brazing method that performs the brazing at a temperature of nearly 500 °C, called low-temperature brazing method, is known. Since this method uses Al-Zn type alloy containing 20 wt. % or more of Zn or Zn alloy as a brazing material, there arises a problem that the brazing material is liable to be corroded after brazing, hence this method is not used practically for the heat-exchanger. In addition, since the rolling property becomes very poor with Al-Zn type alloy if the addition level of Zn exceeds 8 %, this method is unsuitable for the production of brazing sheet by ply rolling. As described no method of stably producing the brazing sheet for low-temperature brazing has been established in the industry. Said brazing material has no choice but to be used as pieces etc., thus limiting the producible kinds of components. The inventors have developed the brazing sheet, however, by finding that the improvement in the characteristics of heat-exchanger is possible even at a brazing temperature of over 570 °C and not higher than 585 °C, being far higher temperature than that for said low-temperature brazing, and have found a method of producing aluminum alloy heat-exchanger with light weight, high strength and high corrosion resistance.

In following, the invention will be illustrated in detail based on the examples.

### Example 1

Aluminum alloys for core material shown in Table 1, aluminum alloys for sacrificial material shown in Table 2 and aluminum alloys for brazing material shown in Table 3 were combined as shown in Tables 4 and 5 to produce brazing sheets with three-layer structure for aluminum alloy tube material. The refining was performed with H-14. The production was performed under following conditions. After casting the core material alloy, it was subject to the homogenizing treatment within a temperature range from 450 °C to 600 °C and both surfaces were planed. Then, alloy plate of brazing material and alloy plate of sacrificial material prepared beforehand were layered on the both sides of core material, respectively, to form a three-layer structural matter, which was hot rolled within a range of the inventive conditions. The cold rolling and the annealing after hot rolling were performed as usual. Moreover, the sacrificial material contains Fe and Si within a range from 0.01 to 0.2 wt. %, respectively, as impurity elements. From the three-layer brazing sheet obtained, samples were cut off and heated in nitrogen gas under the heating condition shown in Tables 6 and 7, which were submitted to the tensile test and internal corrosion resistance test. For the internal corrosion resistance test, a sample with the area of brazing material masked was dipped into top water added with 10 ppm of Cu²⁺ ions for at maximum 8 months and the cyclic corrosion test under the conditions of 88 °C x 8 hr and room temperature x 16 hr was performed to determine the depth of pits generated in the surface of sacrificial material by the focus depth method using an optical microscope. Results are shown in tables 6 and 7. Besides, in Tables 6 and 7, results obtained by examining the amount of Cu at the central portion of core material and the amount of Zn on the surface of sacrificial material using EPMA and results obtained by examining the electric potential difference in natural electric potentials using saturated calomel electrode as a reference electrode were put down for information.

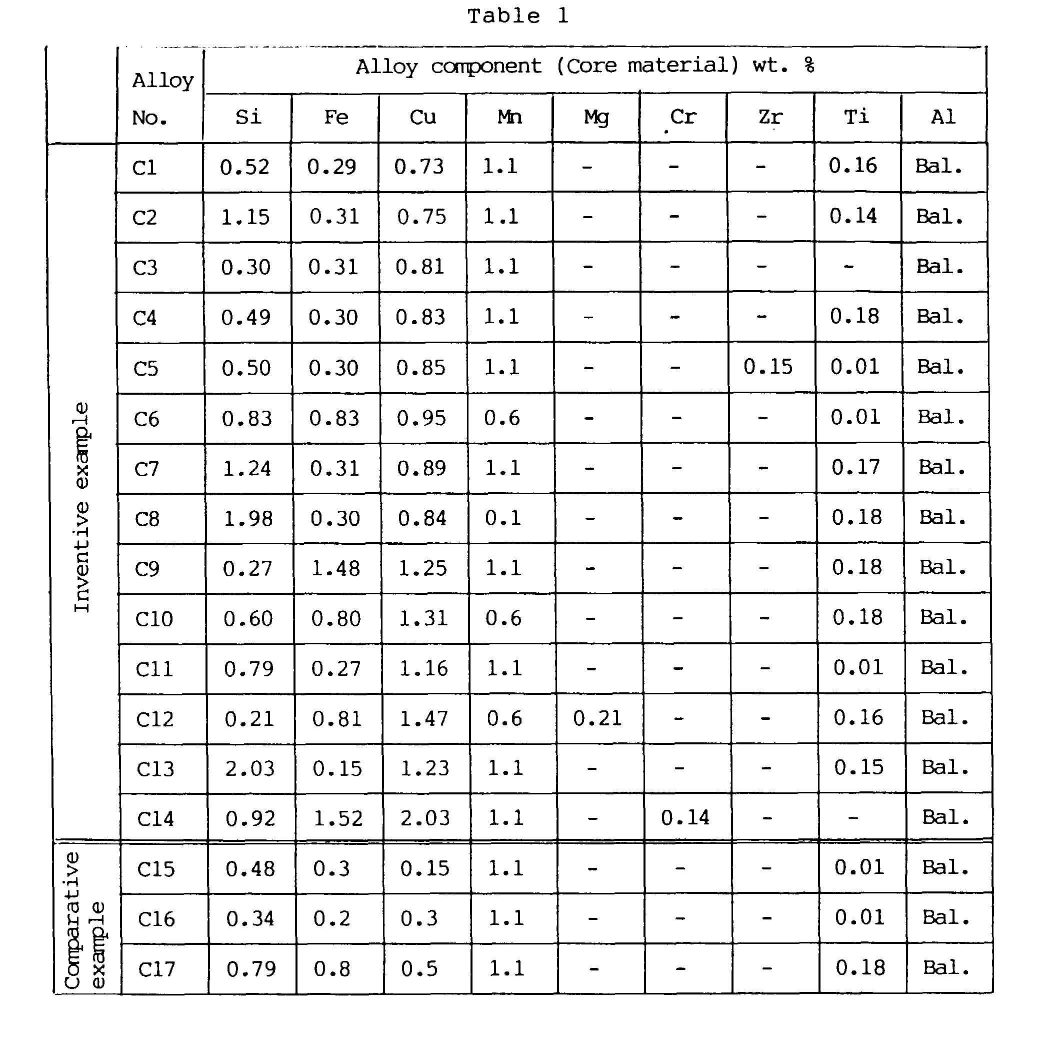

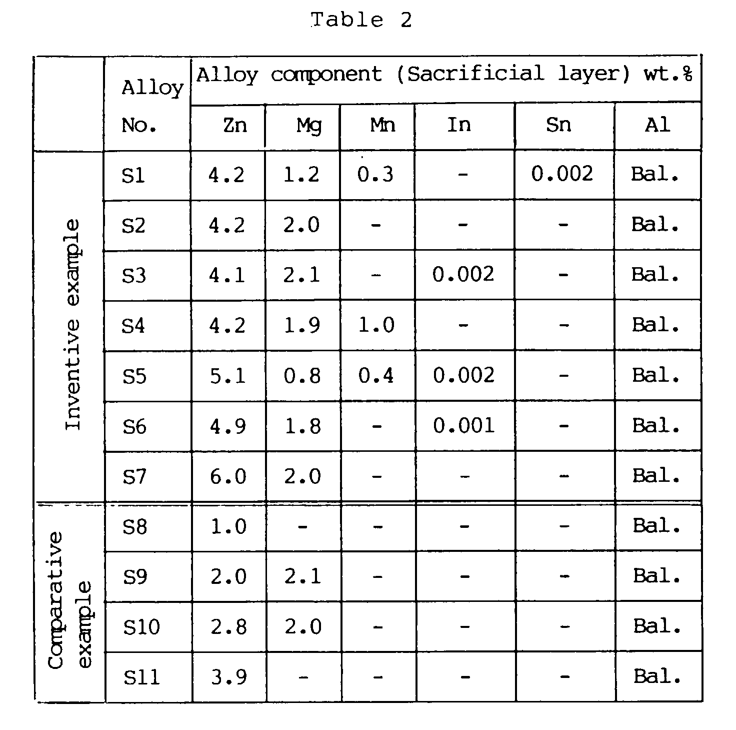

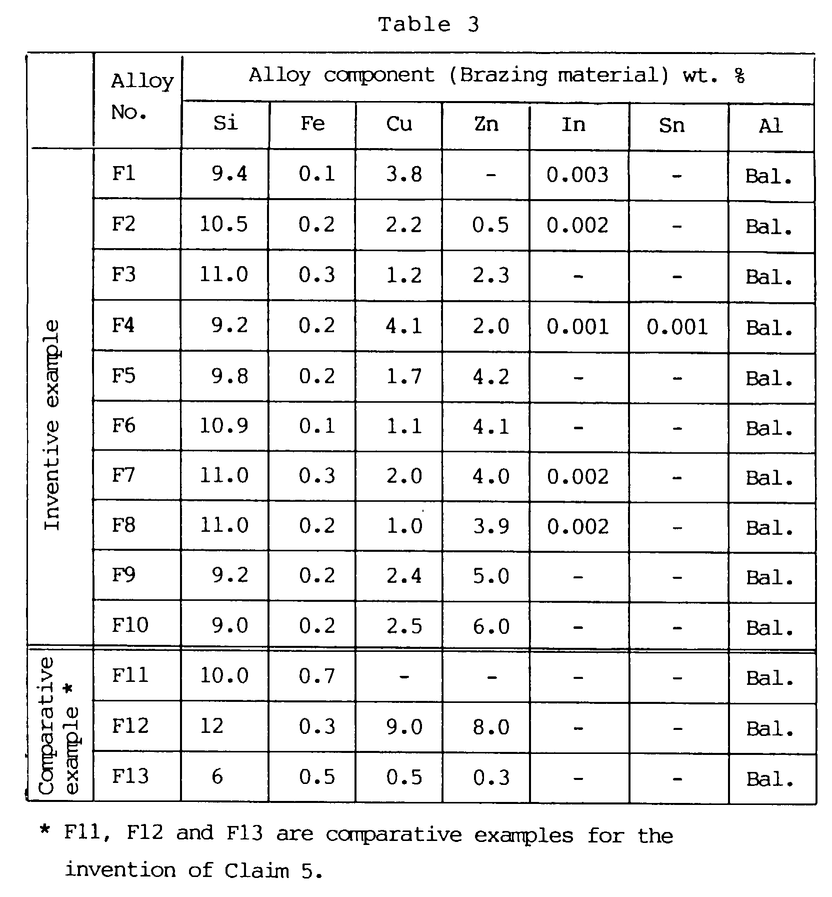

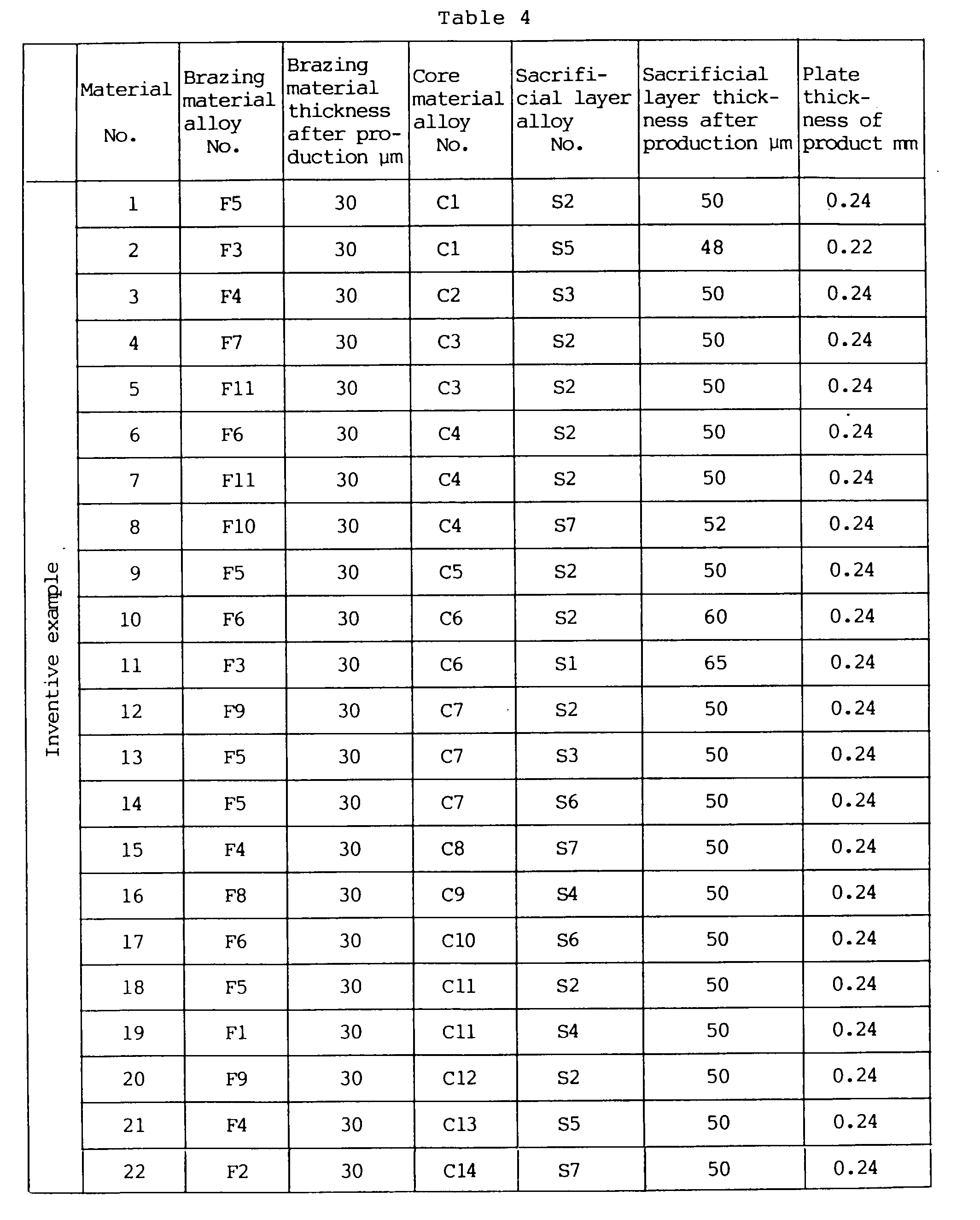

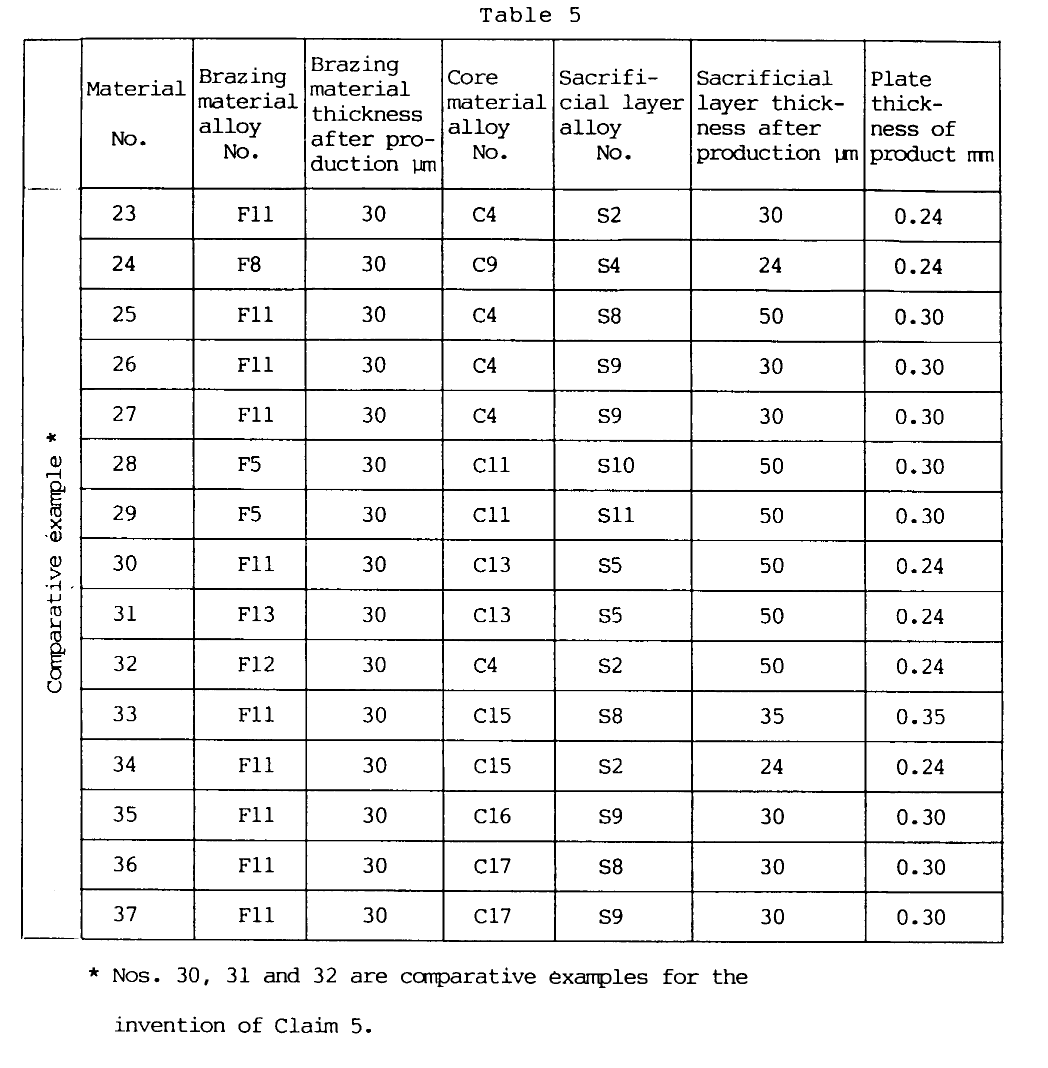

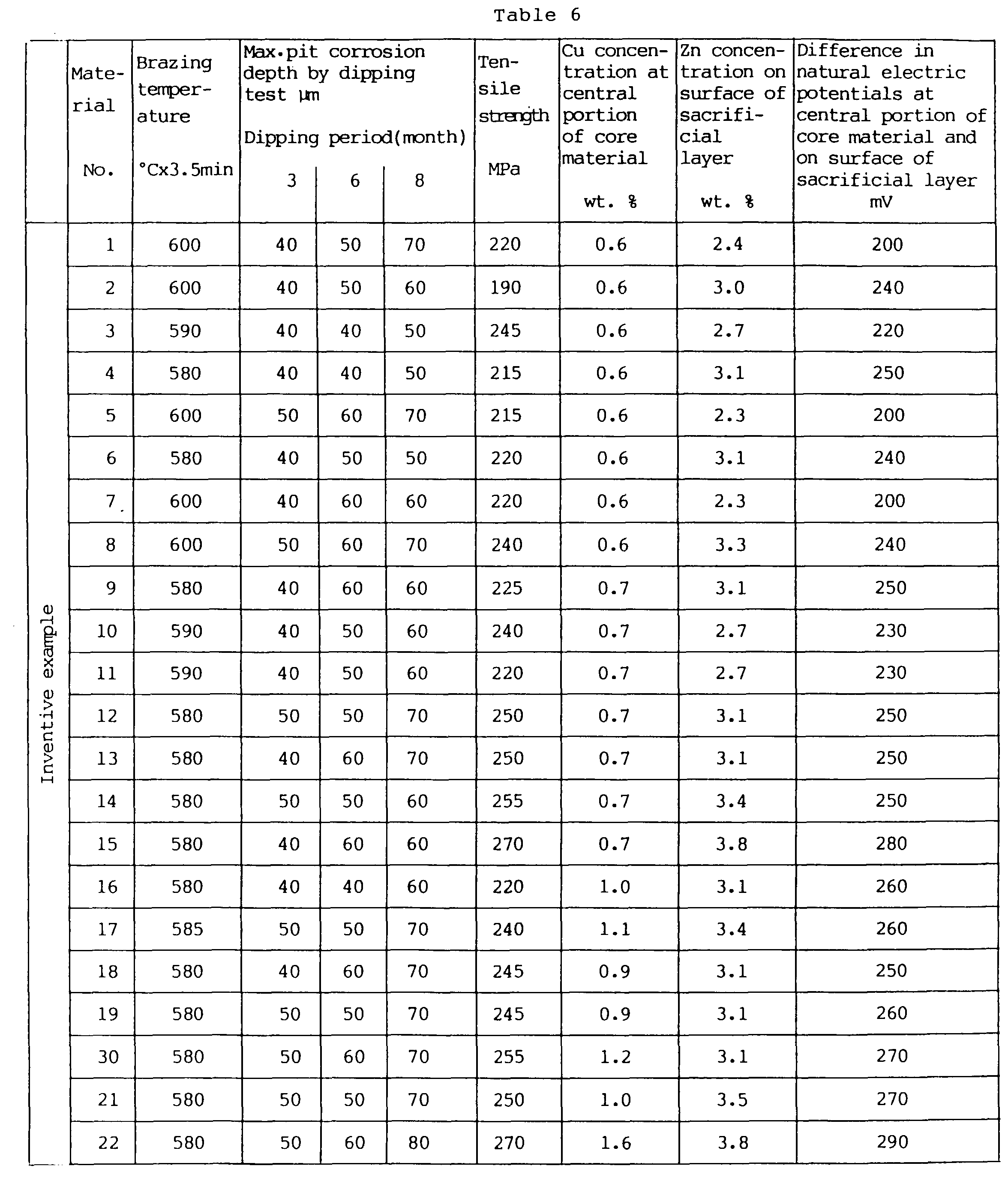

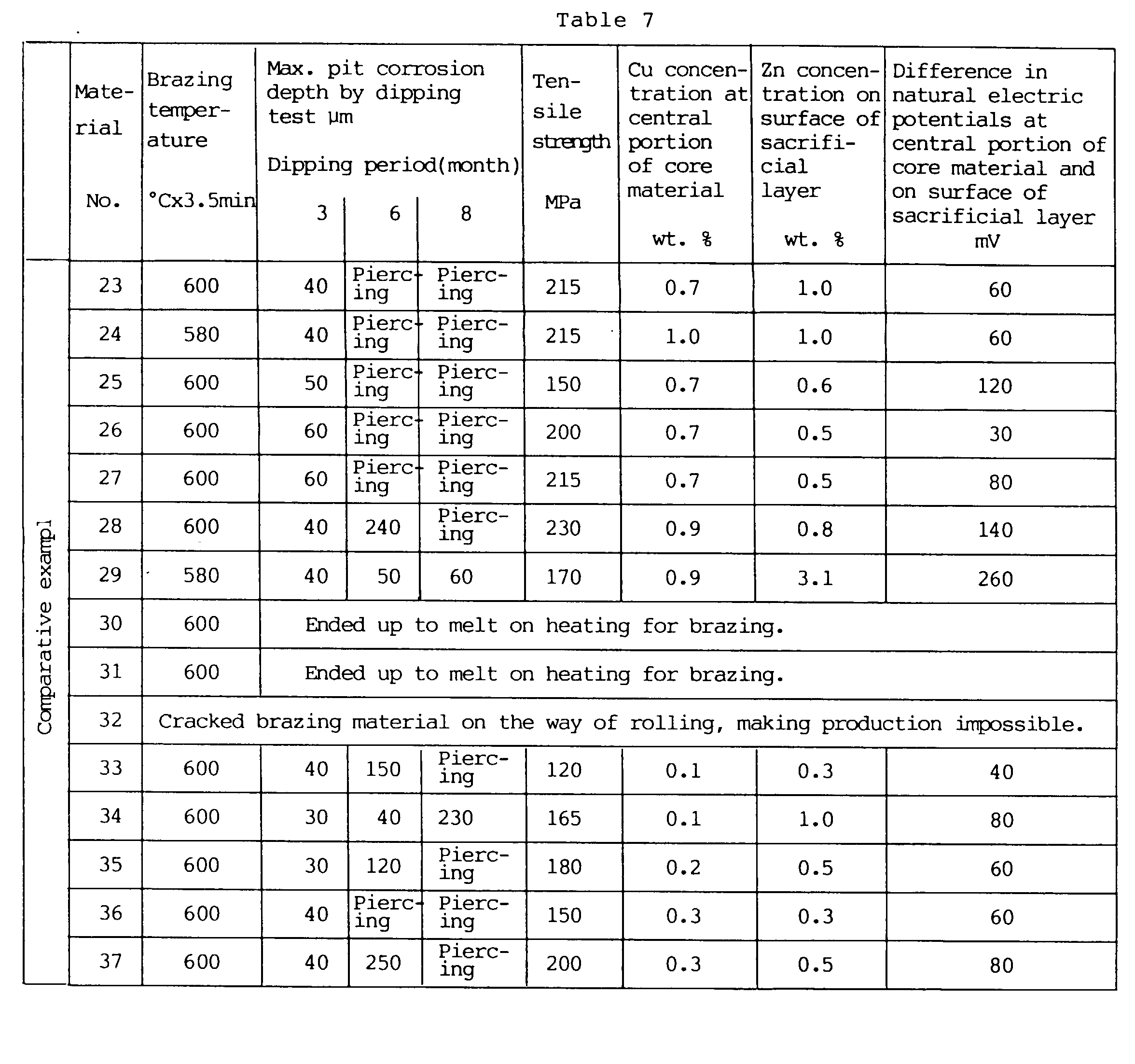

As evident from Tables 1 through 7, the articles of the inventive examples have high strength after brazing and also excellent corrosion resistance.

Whereas, the articles of Comparative examples No. 23 and No. 24 are only different in the thickness of sacrificial material from the articles of inventive examples No. 7 and No. 16 and have the same constitution in others. But, No. 23 and No. 24, which have been used conventionally and have thinner sacrificial material, show poor corrosion resistance.

The article of Comparative example No. 25 is an example wherein Al-1 wt. % Zn alloy having been used conventionally is used for the sacrificial material. It has the thickness of sacrificial material equivalent to the invention, but shows poor strength and corrosion resistance. Comparative examples 26 and 27 are examples wherein Al-Zn alloy added with Mg that was proposed recently is used for the sacrificial material. Because of low addition level of Zn, they show poor corrosion resistance even in the case of the thickness of sacrificial material being within a range of the invention.

The article of Comparative example No. 28 is an example wherein Al-Zn alloy added with Mg is used for the sacrificial material. Because of low addition level of Zn, it shows poor corrosion resistance even in the case of the thickness of sacrificial material being within a range of the invention. Moreover, with the article of Comparative example No. 29, because of no Mg added to the sacrificial material, the corrosion resistance is secured, but the strength is low.

The article of Comparative examples No. 30 and No. 31 are examples wherein a brazing material with composition out of the alloy composition of the inventive razing material is used, despite the core material being low-melting point alloy. Since the brazing temperature could not be made lower, it melted on brazing. The article of Comparative example No. 32 is an example out of the composition ranges of Cu and Zn of the inventive brazing material alloy, and could not be processed to brazing sheet.

The article of Comparative example No. 33, which is so-called the conventional example (a brazing sheet used 3003 alloy for the core material and 7072 alloy for the sacrificial material), has low strength. With the articles of Comparative examples No. 34 through No. 37, the strength is decreased for the degree of less amount of Cu in the core material over that of the invention and, because of different sacrificial layer, too, some of them showed poor corrosion resistance.

### Example 2

Respective aluminum alloys for core material, sacrificial material and brazing material shown in Table 8 were combined as shown in Table 9 to produce brazing sheets with three-layer structure for the aluminum alloy tube material. The refining was performed with H-14.

Concrete production method was as follows: After direct casting of core material alloy in a thickness of 400 mm, it was subject to the homogenizing treatment at a temperature of 450 °C to 600 °C and both surfaces were planed each by 10 mm. Then, alloy plate of brazing material (the plate thickness was made so that a product with target thickness of brazing material could be obtained in each case) and alloy plate of sacrificial material prepared beforehand were put together on the both sides of this core material, which was hot rolled to a 3.5 mm thick plate material under the conditions in Table 10. The situation of pressure welding on hot rolling is put down in Table 10. After hot rolling, the cold rolling was performed while inserting the annealing, and the material having finished the rolling was wound coil-like. The cold rolling and the annealing were made as usual. The sacrificial material contains Fe and Si within a range from 0.01 to 0.2 wt. %, respectively, as impurity elements. The brazing sheet would coil-like was slitted into 35.0 mm wide strip materials adjusting to the size of seam welding pipe. This strip material was processed to a 16.0 mm wide, 2.2 mm thick seam welded pipe for fluid-communicating tube using a device for manufacturing seam welded pipe.

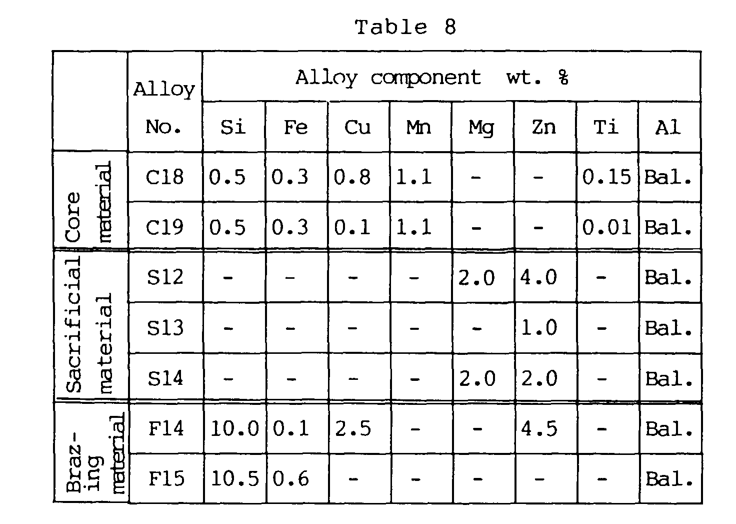

**Table 9**

| Material No. | Brazing material alloy No. | Brazing material thickness after production µm | Core material alloy No. | Sacrificial layer alloy No. | Sacrificial layer thickness after production µm | Plate thickness of product mm |
|---|---|---|---|---|---|---|
| 38 | F14 | 30 | C18 | S12 | 50 | 0.24 |
| 39 | F15 | 30 | C18 | S12 | 50 | 0.24 |
| 40 | F14 | 30 | C18 | S12 | 50 | 0.24 |
| 41 | F14 | 30 | C18 | S12 | 30 | 0.24 |
| 42 | F14 | 30 | C18 | S13 | 50 | 0.24 |
| 43 | F15 | 30 | C18 | S14 | 50 | 0.24 |
| 44 | F15 | 30 | C19 | S13 | 30 | 0.30 |
| 45 | F15 | 30 | C19 | S14 | 30 | 0.30 |

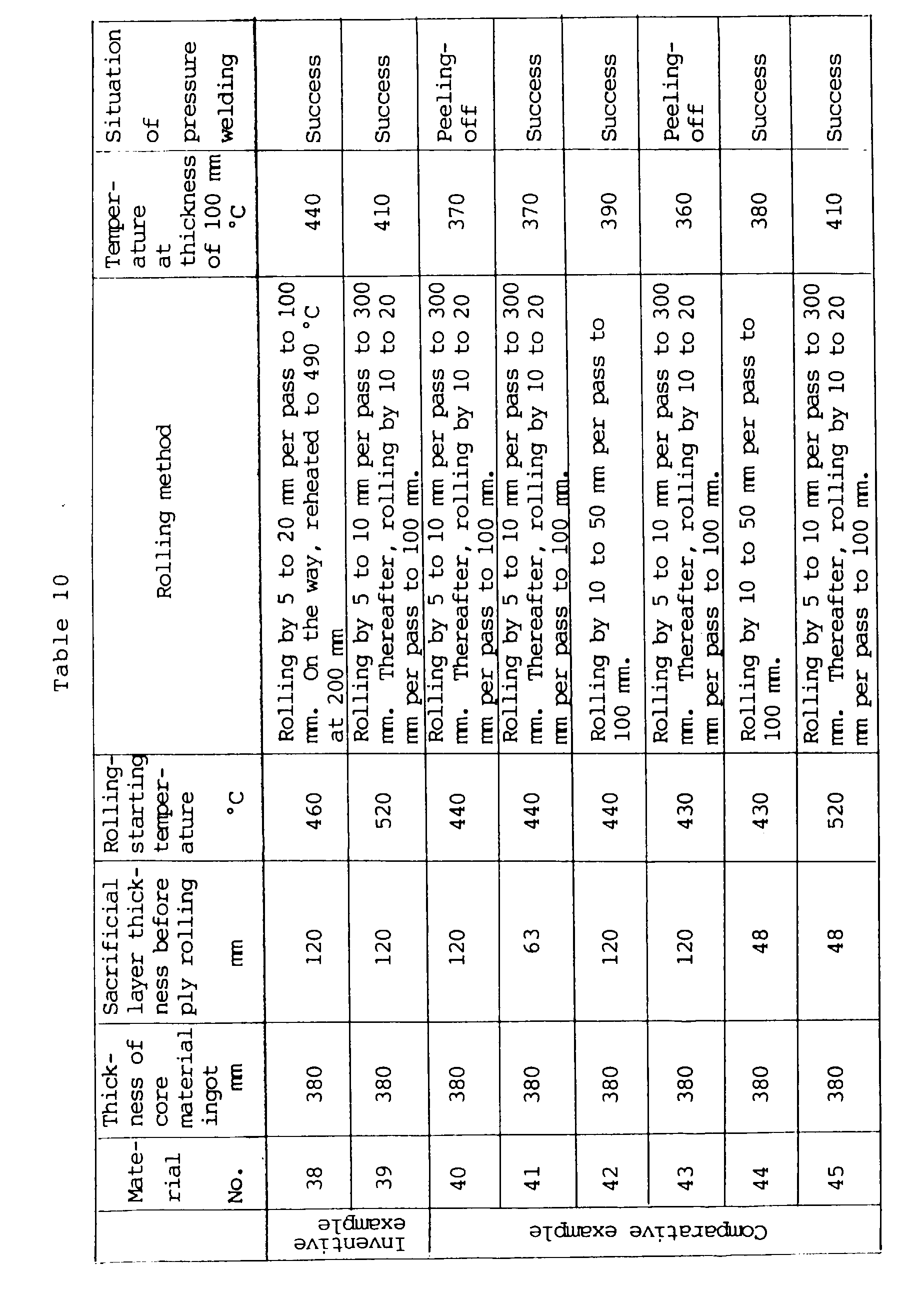

As evident from Tables 8 through 10, all the articles of the inventive examples (No. 38 and No. 39) showed good situation of pressure welding. Whereas, with the articles of Comparative examples No. 40 and No. 43, since the rolling temperature was out of the inventive condition, despite thick sacrificial material relative to the core material, the core material peeled off from the sacrificial material on ply rolling. Moreover, No. 42 and subsequents are tube materials with constitution different from that of the invention. Thereamong, No. 44 has a constitution used commonly hitherto, but it is clear that the thickness of sacrificial material on ply rolling is very thin over that of the invention.

Employing the tube materials obtained in Example 2, radiators shown in Fig. 1 were assembled. For the fin material, a H-14 refined material (thickness 0.07 mm) of an alloy with 1 wt. % of Zn added to JIS-3003 alloy was used. For the header plate material, a 1.0 mm thick H-14 refined material combined 80 % of core material (C19), 10 % of sacrificial material (S13) and 10 % of brazing material (F14) was used. Onto the radiator assembled, a solution of 10 % concentration of potassium fluoride-based flux was coated, which was brazed in a nitrogen gas under the brazing conditions shown in Table 11.

From the radiator obtained, a tube was cut off and the amount of Cu at the central portion of core material of tube and the amount of Zn on the surface of sacrificial material were examined using EPMA. Moreover, the electric potential difference in the natural electric potentials was examined. Furthermore, a tube with the area of brazing material masked was dipped into tap water added with 10 ppm of Cu²⁺ ions for at maximum 8 months and the cyclic corrosion test under the conditions of 88 °C x 8 hr and room temperature x 16 hr was performed to determine the depth of pits generated in the surface of sacrificial material by the focus depth method using an optical microscope. For information, the electric potential difference in natural electric potentials at the central portion of core material and on the surface of sacrificial material was examined using saturated calomel electrode as a reference electrode. Moreover, a sample was cut off from the tube material before brazing and this sample was heated at the same time as the brazing of radiator under same conditions, which was submitted to the tensile test. Results are shown in Table 11.

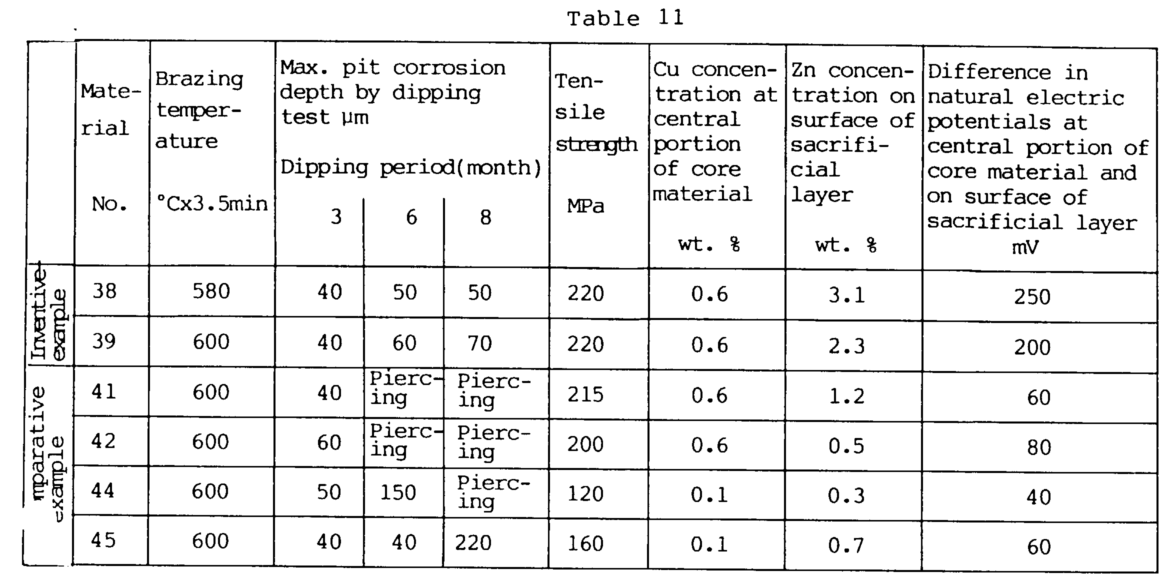

As evident from Table 11, the inventive heat-exchangers were excellent in the corrosion resistance and tensile strength. Both of the Cu concentration at the central portion of core material and the Zn concentration in the surface of sacrificial material are high, thus the difference in natural electric potentials between both is high, backing up the good corrosion resistance.

Whereas, the article of Comparative example No. 41 showed poor corrosion resistance because of thin sacrificial material. No. 42 wherein conventional Al-1 wt. % Zn alloy is used for the sacrificial material, has somewhat lower strength and poor corrosion resistance. No. 44 and No. 45 are using JIS-3003 alloy being a conventional alloy for the core material and the thickness of sacrificial material is also conventional one. Hence, the strength is low and additionally the corrosion resistance is low despite thick plate, compared with the inventive examples.

As described above, the aluminum alloy brazing sheet in accordance with the invention has high strength and excellent corrosion resistance after blazing. When producing the heat-exchanger, therefore, it is possible to downsize and lighten the weight, exerting remarkable effect industrially.

## Claims

1. A brazing sheet for heat-exchanger tube with three-layer structure in a thickness of not more than 0.25 mm, using an aluminum alloy comprising over 0.2 wt. % and not more than 2.5 wt. % of Si, over 0.05 wt. % and not more than 2.0 wt. % of Fe, over 0.7 wt. % and not more than 2.5 wt. % of Cu, over 0.05 wt. % and not more than 2.0 wt. % % of Mn and the balance of aluminum and inevitable impurities as a core material, cladded one side thereof with an aluminum alloy comprising over 3.0 wt. % and not more than 6.0 wt. % of Zn, over 0.05 wt. % and not more than 2.5 wt. % of Mg and the balance of aluminum and inevitable impurities in a thickness of over 46 µm and not more than 70 µm as a sacrificial material, and cladded other side thereof with a brazing material comprising an aluminum alloy comprising over 0.3 wt.% and not more than 8.0 wt.% of Cu.

2. A brazing sheet for heat-exchanger tube with three-layer structure in a thickness of not more than 0.25 mm, using an aluminum alloy comprising over 0.2 wt. % and not more than 2.5 wt. % of Si, over 0.05 wt. % and not more than 2.0 wt. % of Fe, over 0.7 wt. % and not more than 2.5 wt. % of Cu, over 0.05 wt. % and not more than 2.0 wt. % of Mn, one or not less than two kinds selected from a group consisting of not more than 0.5 wt. % of Mg, not more than 0.3 wt. % of Cr, not more than 0.3 wt. % of Zr and not more than 0.3 wt. % of Ti, and the balance of aluminum and inevitable impurities as a core material, cladded one side thereof with an aluminum alloy comprising over 3.0 wt. % and not more than 6.0 wt. % of Zn, over 0.05 wt. % and not more than 2.5 wt. % of Mg, and the balance of aluminum and inevitable impurities in a thickness of over 46 µm and not more than 70 µm as a sacrificial material, and cladded other side thereof with a brazing material comprising an aluminum alloy comprising over 0.3 wt.% and not more than 8.0 wt.% of Cu.

3. A brazing sheet for heat-exchanger tube with three-layer structure in a thickness of not more than 0.25 mm, using an aluminum alloy comprising over 0.2 wt. % and not more than 2.5 wt. % of Si, over 0.05 wt. % and not more than 2.0 wt. % of Fe, over 0.7 wt. % and not more than 2.5 wt. % of Cu, over 0.05 wt. % and not more than 2.0 wt. % of Mn and the balance of aluminum and inevitable impurities as a core material, cladded one side thereof with an aluminum alloy comprising over 3.0 wt. % and not more than 6.0 wt. % of Zn, over 0.05 wt. % and not more than 2.5 wt. % of Mg, one or not less than two kinds selected from a group consisting of not more than 0.3 wt. % of In, not more than 0.3 wt. % of Sn and not more than 1.6 wt. % of Mn, and the balance of aluminum and inevitable impurities in a thickness of over 46 µm and not more than 70 µm as a sacrificial material, and cladded other side thereof with a brazing material comprising an aluminum alloy comprising over 0.3 wt.% and not more than 8.0 wt.% of Cu.

4. A brazing sheet for heat-exchanger tube with threelayer structure in a thickness of not more than 0.25 mm, using an aluminum alloy comprising over 0.2 wt. % and not more than 2.5 wt. % of Si, over 0.05 wt. % and not more than 2.0 wt. % of Fe, over 0.7 wt. % and not more than 2.5 wt. % of Cu, over 0.05 wt. % and not more than 2.0 wt. % of Mn, one or not less than two kinds selected from a group consisting of not more than 0.5 wt. % of Mg, not more than 0.3 wt. % of Cr, not more than 0.3 wt. % of Zr and not more than 0.3 wt. % of Ti, and the balance of aluminum and inevitable impurities as a core material, cladded one side thereof with an aluminum alloy comprising over 3.0 wt. % and not more than 6.0 wt. % of Zn, over 0.05 wt. % and not more than 2.5 wt. % of Mg, one or not less than two kinds selected from a group consisting of not more than 0.3 wt. % of In, not more than 0.3 wt. % of Sn and not more than 1.6 wt. % of Mn, and the balance of aluminum and inevitable impurities in a thickness of over 46 µm and not more than 70 µm as a sacrificial material, and cladded other side thereof with a brazing material comprising an aluminum alloy comprising over 0.3 wt.% and not more than 8.0 wt.% of Cu.

5. The aluminum alloy brazing sheet for heat-exchanger tube of any of Claims 1 through 4, using a brazing material comprising over 7.0 wt. % and not more than 12.0 wt. % of Si, over 0.3 wt. % and not more than 8.0 wt. % of Cu, one or not less than two kinds selected from a group consisting of over 0.5 wt. % and not more than 7.0 wt. % of Zn, over 0.001 wt. % and not more than 0.3 wt. % of In and over 0.001 wt. % and not more than 0.3 wt. % of Sn, and the balance of aluminum and inevitable impurities for the brazing material.

6. A method of producing the brazing sheet of any of Claims 1 through 5 by rolling and pressure welding the three-layer structural material layered brazing material, core material and sacrificial material in order, comprising the procedures of making the rolling-starting temperature to be not lower than 450 °C and making the rolling temperature at a thickness of said three-layer structural material during rolling of not less than 100 mm to be not lower than 400 °C.

7. An aluminum alloy heat-exchanger in the aluminum alloy heat-exchanger assembled by brazing technique using the tube material formed with the brazing sheet of any of Claims 1 through 5 as a main component, comprising the procedures of making the thickness of said tube material to be not more than 0.25 mm, making the thickness of sacrificial material to be over 46 µm and not more than 70 µm, making the Cu concentration at the central portion of core material to be over 0.40 wt. % and not higher than 2.0 wt. and making the Zn concentration on the surface of sacrificial material to be over 1.6 wt. % and not higher than 4.0 wt. %.

8. A method of producing the aluminum alloy heat-exchanger of claim 7 by the method of claim 6 whereby the heat-exchanger is assembled by brazing using the brazing sheet of Claim 5 under the condition of reaching a temperature of 570 to 585 °C.

## Patentansprüche

1. Hartlotfolie für ein Wärmeaustauscherrohr mit einer Dreischichtstruktur in einer Dicke von nicht mehr als 0,25 mm, unter Verwendung einer Aluminiumlegierung, umfassend über 0,2 Gew.-% und nicht mehr als 2,5 Gew.-% Si, über 0,05 Gew.-% und nicht mehr als 2,0 Gew.-% Fe, über 0,7 Gew.-% und nicht mehr als 2,5 Gew.-% Cu, über 0,05 Gew.-% und nicht mehr als 2,0 Gew.-% Mn und als Rest Aluminium und unvermeidbare Verunreinigungen, als Kernmaterial, dessen eine Seite mit einer Aluminiumlegierung plattiert ist, umfassend über 3,0 Gew.-% und nicht mehr als 6,0 Gew.-% Zn, über 0,05 Gew.-% und nicht mehr als 2,5 Gew.-% Mg und als Rest Aluminium und unvermeidbare Verunreinigungen in einer Dicke von über 46 µm und nicht mehr als 70 µm als Opfermaterial, und dessen andere Seite mit einem Hartlotmaterial plattiert ist, umfassend eine Aluminiumlegierung, welche über 0,3 Gew.-% und nicht mehr als 8,0 Gew.-% Cu umfaßt.

2. Hartlotfolie für ein Wärmeaustauscherrohr mit einer Dreischichtstruktur in einer Dicke von nicht mehr als 0,25 mm, unter Verwendung einer Aluminiumlegierung, umfassend über 0,2 Gew.-% und nicht mehr als 2,5 Gew.-% Si, über 0,05 Gew.-% und nicht mehr als 2,0 Gew.-% Fe, über 0,7 Gew. -% und nicht mehr als 2,5 Gew.-% Cu, über 0,05 Gew.-% und nicht mehr 2,0 Gew.-% Mn, eine oder nicht weniger als zwei Arten, gewählt aus einer nicht mehr als 0,5 Gew.-% Mg, nicht mehr als 0,3 Gew.-% Cr, nicht mehr als 0,3 Gew.-% Zr und nicht mehr als 0,3 Gew.-% Ti umfassenden Gruppe, und als Rest Aluminium und unvermeidbaren Verunreinigungen, als ein Kernmaterial, dessen eine Seite mit einer Aluminiumlegierung plattiert ist, umfassend über 3,0 Gew.-% und nicht mehr als 6,0 Gew.-% Zn, über 0,05 Gew.-% und nicht mehr als 2,5 Gew.-% Mg, und als Rest Aluminium und unvermeidbare Verunreinigungen in einer Dicke über 46 µm und nicht mehr als 70 µm als Opfermaterial, und dessen andere Seite mit einem Hartlotmaterial plattiert ist, umfassend eine Aluminiumlegierung, welche über 0,3 Gew.-% und nicht mehr als 8,0 Gew.-% Cu umfaßt.

3. Hartlotfolie für eine Wärmeaustauscherrohr mit einer Dreischichtstruktur in einer Dicke von nicht mehr als 0,25 mm, unter Verwendung einer Aluminiumlegierung, umfassend über 0,2 Gew.-% und nicht mehr als 2,5 Gew.-% Si, über 0,05 Gew.-% und nicht mehr als 2,0 Gew.-% Fe, über 0,7 Gew.-% und nicht mehr als 2,5 Gew.-% Cu, über 0,05 Gew.-% und nicht mehr als 2,0 Gew.-% Mn und als Rest Aluminium und unvermeidbare Verunreinigungen, als ein Kernmaterial, dessen eine Seite mit einer Aluminiumlegierung plattiert ist, umfassend über 3,0 Gew.-% und nicht mehr als 6,0 Gew.-% Zn, über 0,05 Gew.-% und nicht mehr als 2,5 Gew.-% Mg, eine oder nicht weniger als zwei Arten, gewählt aus der nicht mehr als 0,3 Gew.-% In, nicht mehr als 0,3 Gew.-% Sn und nicht mehr als 1,6 Gew.-% Mn umfassenden Gruppe, und als Rest Aluminium und unvermeidbare Verunreinigungen in einer Dicke über 46 µm und nicht mehr als 70 µm als Opfermaterial, und dessen andere Seite mit einem Hartlotmaterial plattiert ist, umfassend eine Aluminiumlegierung, welche über 0,3 Gew.-% und nicht mehr als 8,0 Gew.-% Cu umfaßt.

4. Hartlotfolie für ein Wärmeaustauscherrohr mit einer Dreischichtstruktur in einer Dicke von nicht mehr als 0,25 mm, unter Verwendung einer Aluminiumlegierung, umfassend über 0,2 Gew.-% und nicht mehr als 2,5 Gew.-% Si, über 0,05 Gew.-% und nicht mehr als 2,0 Gew.-% Fe, über 0,7 Gew.-% und nicht mehr als 2,5 Gew.-% Cu, über 0,05 Gew.-% und nicht mehr als 2,0 Gew.-% Mn, eine oder nicht weniger als zwei Arten, gewählt aus der nicht mehr als 0,5 Gew.-% Mg, nicht mehr als 0,3 Gew.-% Cr, nicht mehr als 0,3 Gew.-% Zr und nicht mehr als 0,3 Gew.-% Ti umfassenden Gruppe, und als Rest Aluminium und unvermeidbare Verunreinigungen als ein Kernmaterial, dessen eine Seite mit einer Aluminiumlegierung plattiert ist, umfassend über 3,0 Gew.-% und nicht mehr als 6,0 Gew.-% Zn, über 0,05 Gew.-% und nicht mehr als 2,5 Gew.-% Mg, eine oder nicht weniger als zwei Arten, gewählt aus der nicht mehr als 0,3 Gew.-% In, nicht mehr als 0,3 Gew.-% Sn und nicht mehr als 1,6 Gew.-% Mn umfassenden Gruppe, und als Rest Aluminium und unvermeidbare Verunreinigungen in einer Dicke über 46 µm und nicht mehr als 70 µm als ein Opfermaterial, und dessen andere Seite mit einem Hartlotmaterial plattiert ist, umfassend eine Aluminiumlegierung, welche über 0,3 Gew.-% und nicht mehr als 8,0 Gew.-% Cu umfaßt.

5. Hartlotfolie aus einer Aluminiumlegierung für ein Wärmeaustauscherrohr nach mindestens einem der Ansprüche 1 bis 4, unter Verwendung eines Hartlotmaterials, umfassend über 7,0 Gew.-% und nicht mehr als 12,0 Gew.-% Si, über 0,3 Gew.-% und nicht mehr als 8,0 Gew.-% Cu, eine oder nicht weniger als zwei Arten, gewählt aus der über 0,5 Gew.-% und nicht mehr als 7,0 Gew.-% Zn, über 0,001 Gew.-% und nicht mehr als 0,3 Gew.-% In und über 0,001 Gew.-% und nicht mehr als 0,3 Gew.-% Sn umfassenden Gruppe, und als Rest Aluminium und unvermeidbare Verunreinigungen für das Hartlotmaterial.

6. Verfahren zur Herstellung der Hartlotfolie gemäß mindestens einem der Ansprüche 1 bis 5 durch Walzen und Preßschweißen des Dreischicht-Strukturmaterials, geschichtet in der Reihenfolge Hartlotmaterial, Kernmaterial und Opfermaterial, umfassend die Verfahrensweisen des Einstellens der Walz-Starttemperatur auf nicht weniger als 450°C und des Einstellens der Walztemperatur bei einer Dicke des Dreischicht-Strukturmaterials während des Walzens von nicht weniger als 100 mm auf nicht weniger als 400°C.

7. Wärmeaustauscher aus einer Aluminiumlegierung, wobei der Wärmeaustauscher aus einer Aluminiumlegierung durch eine Hartlottechnik unter Verwendung des aus der Hartlotfolie gemäß mindestens einem der Ansprüche 1 bis 5 als Hauptkomponente geformten Rohrmaterials zusammengesetzt worden ist, umfassend die Verfahrensweisen des Einstellens der Dicke des Rohrmaterials auf nicht mehr als 0,25 mm, des Einstellens der Dicke des Opfermaterials auf über 46 µm und nicht mehr als 70 µm. des Einstellens der Cu-Konzentration im Zentrumsbereich des Kernmaterials auf über 0,40 Gew.-% und nicht höher als 2,0 Gew.-% und des Einstellens der Zn-Konzentration an der Oberfläche des Opfermaterials auf über 1,6 Gew.-% und nicht höher als 4,0 Gew.-%.

8. Verfahren zur Herstellung des Wärmeaustauschers aus einer Aluminiumlegierung nach Anspruch 7, durch das Verfahren gemäß Anspruch 6, wobei der Wärmeaustauscher durch Hartlöten unter Verwendung der Hartlotfolie gemäß Anspruch 5 unter der Bedingung des Erreichens einer Temperatur von 570 bis 585°C zusammengesetzt wird.

## Revendications

1. Feuille de brasage pour un tube d'échangeur de chaleur ayant une structure à trois couches sur une épaisseur d'au plus 0,25 mm, utilisant un alliage d'aluminium comprenant plus de 0,2% en poids et pas plus de 2,5% en poids de Si, plus de 0,05% en poids et pas plus de 2,0% en poids de Fe, plus de 0,7% en poids et pas plus de 2,5% en poids de Cu, plus de 0,05% en poids et pas plus de 2,0% en poids de Mn et le complément d'aluminium et d'impuretés inévitables en tant que matériau de coeur, dont un côté est plaqué sur un alliage d'aluminium comprenant plus de 3,0% en poids et pas plus de 6,0% en poids de Zn, plus de 0,05% en poids et pas plus de 2,5% en poids de Mg et le complément d'aluminium et d'impuretés inévitables sur une épaisseur de plus de 46 um et pas plus de 70 um en tant que matériau sacrificiel, et dont l'autre côté est plaqué sur un matériau de brasage comprenant un alliage d'aluminium comprenant plus de 0,3% en poids et pas plus de 8,0% en poids de Cu.

2. Feuille de brasage pour un tube d'échangeur de chaleur ayant une structure à trois couches sur une épaisseur ne dépassant pas 0,25 mm, utilisant un alliage d'aluminium comprenant plus de 0,2% en poids et pas plus de 2,5% en poids de Si, plus de 0,05% en poids et pas plus de 2,0% en poids de Fe, plus de 0,7% en poids et pas plus de 2,5% en poids de Cu, plus de 0,05% en poids et pas plus de 2,0% en poids de Mn, un ou pas moins de deux types choisis dans le groupe constitué de pas plus de 0,5% en poids de Mg, pas plus de 0,3% en poids de Cr, pas plus de 0,3% en poids de Zr et pas plus de 0,3% en poids de Ti, et le complément d'aluminium et d'impuretés inévitables en tant que matériau de coeur, dont un côté est plaqué sur un alliage d'aluminium comprenant plus de 3,0% en poids et pas plus de 6,0% en poids de Zn, plus de 0,05% en poids et pas plus de 2,5% en poids de Mg et le complément d'aluminium et d'impuretés inévitables sur une épaisseur de plus de 46 um et pas plus de 70 µm en tant que matériau sacrificiel, et dont l'autre côté est plaqué sur un matériau de brasage comprenant un alliage d'aluminium comprenant plus de 0,3% en poids et pas plus de 8,0% en poids de Cu.

3. Feuille de brasage pour un tube d'échangeur de chaleur ayant une structure à trois couches sur une épaisseur d'au plus 0,25 mm, utilisant un alliage d'aluminium comprenant plus de 0,2% en poids et pas plus de 2,5% en poids de Si, plus de 0,05% en poids et pas plus de 2,0% en poids de Fe, plus de 0,7% en poids et pas plus de 2,5% en poids de Cu, plus de 0,05% en poids et pas plus de 2,0% en poids de Mn et le complément d'aluminium et d'impuretés inévitables en tant que matériau de noyau, dont un côté est plaqué sur un alliage d'aluminium comprenant plus de 3,0% en poids et pas plus de 6,0% en poids de Zn, plus de 0,05% en poids et pas plus de 2,5% en poids de Mg, un ou pas moins de deux types choisis dans le groupe constitué de pas plus de 0,3% en poids de In, pas plus de 0,3% en poids de Sn et pas plus de 1,6% en poids de Mn, et le complément d'aluminium et d'impuretés inévitables sur une épaisseur de plus de 46 µm et pas plus de 70 µm en tant que matériau sacrificiel, et dont l'autre côté est plaqué sur un matériau de brasage comprenant un alliage d'aluminium comprenant plus de 0,3% en poids et pas plus de 8,0% en poids de Cu.

4. Feuille de brasage pour un tube d'échangeur de chaleur ayant une structure à trois couches sur une épaisseur d'au plus 0,25 mm, utilisant un alliage d'aluminium comprenant plus de 0,2% en poids et pas plus de 2,5% en poids de Si, plus de 0,05% en poids et pas plus de 2,0% en poids de Fe, plus de 0,7% en poids et pas plus de 2,5% en poids de Cu, plus de 0,05% en poids et pas plus de 2,0% en poids de Mn, un ou pas moins de deux types choisis dans le groupe constitué de pas plus de 0,5% en poids de Mg, pas plus de 0,3% en poids de Cr, pas plus de 0,3% en poids de Zr et pas plus de 0,3% en poids de Ti, et le complément d'aluminium et d'impuretés inévitables en tant que matériau de coeur, dont un côté est plaqué sur un alliage d'aluminium comprenant plus de 3,0% en poids et pas plus de 6,0% en poids de Zn, plus de 0,05% en poids et pas plus de 2,5% en poids de Mg, un ou pas moins de deux types choisis dans le groupe constitué de pas plus de 0,3% en poids de In, pas plus de 0,3% en poids de Sn et pas plus de 1,6% en poids de Mn, et le complément d'aluminium et d'impuretés inévitables sur une épaisseur de plus de 46 um et pas plus de 70 µm en tant que matériau sacrificiel, et dont l'autre côté est plaqué sur un matériau de brasage comprenant un alliage d'aluminium comprenant plus de 0,3% en poids et pas plus de 8,0% en poids de Cu.

5. Feuille de brasage en alliage d'aluminium pour un tube d'échangeur de chaleur selon l'une quelconque des revendications 1 à 4, utilisant un matériau de brasage comprenant plus de 7,0% en poids et pas plus de 12,0% en poids de Si, plus de 0,3% en poids et pas plus de 8,0% en poids de Cu, un ou pas moins de deux types choisis dans le groupe constitué de plus de 0,5% en poids et pas plus de 7,0% en poids de Zn, plus de 0,001% en poids et pas plus de 0,3% en poids de In, et plus de 0,001% en poids et pas plus de 0,3% de Sn, et le complément d'aluminium et d'impuretés inévitables, en tant que matériau de brasage.

6. Procédé de production de la feuille de brasage selon l'une quelconque des revendications 1 à 5, par laminage et pas soudage sous pression d'un matériau de brasage en couches de matériau de structure à trois couches, du matériau de coeur et du matériau sacrificiel, dans l'ordre, comprenant les modes opératoires consistant à prendre une température de début de laminage non inférieure à 450°C et à prendre une température de laminage, pour une épaisseur dudit matériau de structure à trois couches pendant le laminage non inférieure à 100 mm, non inférieure à 400°C.

7. Echangeur de chaleur en alliage d'aluminium dans l'échangeur de chaleur en alliage d'aluminium assemblé par une technique de brasage utilisant le matériau tubulaire formé à partir de la feuille de brasage selon l'une quelconque des revendications 1 à 5 comme composant principal, comprenant les modes opératoires consistant à prendre une épaisseur dudit matériau tubulaire non supérieure à 0,25 mm, à prendre une épaisseur du matériau sacrificiel supérieure à 46 um et d'au plus 70 µm, à prendre une concentration en Cu au niveau de la partie centrale du matériau de coeur supérieure à 0,40% en poids et non supérieure à 2,0% en poids, et à prendre une concentration en Zn à la surface du matériau sacrificiel supérieure à 1,6% en poids et non supérieure à 4,0% en poids.

8. Procédé de production de l'échangeur de chaleur en alliage d'aluminium selon la revendication 7 par le procédé selon la revendication 6, afin d'assembler l'échangeur de chaleur par brasage en utilisant la feuille de brasage selon la revendication 5, à condition d'atteindre une température de 570 à 585°C.
